# EUROPEAN PATENT APPLICATION

(11) **EP 4 760 932 A1**
(43) Date of publication of application: **17.06.2026**
(21) Application number: 25795027.9
(22) Date of filing: 21.04.2025
(51) Int. Cl.: H01M 50/264, H01M 50/244, H01M 50/271, H01M 50/24, H01M 50/503, H01M 50/249, H01M 10/42

(54) **BATTERY CELL ASSEMBLY, BATTERY PACK, AND TRANSPORTATION MEANS COMPRISING SAME**

(30) Priority: 24.04.2024 KR 20240054702
(71) Applicant: LG Energy Solution, Ltd., Seoul 07335 (KR)
(72) Inventor: YOO, Dong Won, Daejeon 34122 (KR)
(74) Representative: Plasseraud IP
(86) International application number: PCT/KR2025/005368
(87) International publication number: WO 2025/225989

(57) **Abstract**

[Summary]

A battery cell assembly related to one example of the present invention may comprise a plurality of battery cells, a housing including an accommodation portion in which the plurality of battery cells is accommodated, and at least one or more fixing members arranged to cover at least a partial region of an outer surface of each of the plurality of battery cells, for fixing the battery cells inside the accommodation portion, and having a battery cell exposure hole so that a portion of the battery cell is exposed to the outside.

## Description

### [Technical Field]

The present invention relates to a battery cell assembly, a battery pack, and a transportation device comprising the same, and more specifically, relates to a structure in which battery cells can be stably fixed in a housing while facilitating replacement of individual battery cells.

This application claims the benefit of priority based on Korean Patent Application No. 10-2024-0054702 dated April 24, 2024, the disclosure of which is incorporated herein by reference in its entirety.

### [Background Art]

Recently, rechargeable secondary batteries have been widely used as an energy source for wireless mobile devices. In addition, secondary batteries have also attracted attention as an energy source for electric transportation devices, hybrid electric transportation devices, and the like., which are proposed as a solution to air pollution from existing gasoline transportation devices, diesel transportation devices, and the like, using fossil fuels. Therefore, the types of applications that use secondary batteries are very diverse due to the advantages of secondary batteries, and it is expected that secondary batteries will be applied to more fields and products in the future.

Generally, the secondary battery can be provided with a plurality of battery cells, where depending on the shape of the battery case, such a battery cell is classified into cylindrical battery and rectangular battery cells in which an electrode assembly is embedded into a cylindrical or rectangular metal can, and pouch-type battery cells in which an electrode assembly is embedded into a pouch-type case of an aluminum laminate sheet, and the electrode assembly embedded into the battery case is a power generation element consisting of a structure of a positive electrode, a negative electrode, and a separator interposed between these positive and negative electrodes to be capable of charging and discharging, which is classified into a jelly-roll type wound by interposing a separator between long sheet-shaped positive and negative electrodes coated with active materials, and, and a stack type in which multiple positive and negative electrodes with a certain size are sequentially laminated in a state where a separator is interposed therebetween.

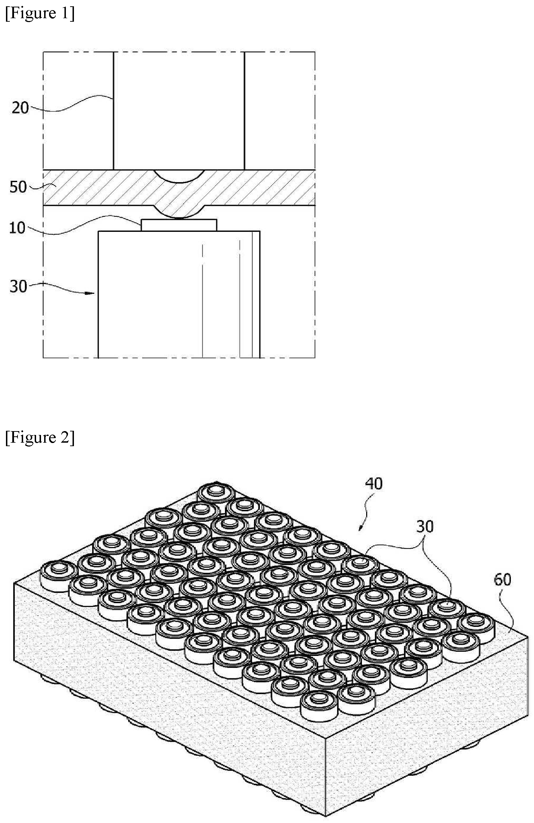

Figure 1 is a cross-sectional diagram schematically showing a welding process of a general battery cell (30) and a bus-bar (50). Then, Figure 2 is a perspective diagram schematically showing a battery cell assembly (40) including battery cells (30) fixed using an adhesive (60) of a conventional art.

Referring to Figures 1 and 2, in the advanced technology field, a battery pack (not shown) comprising a battery cell assembly (or battery cell laminate) consisting of multiple battery cells (30), and a battery management system is used to supply a power source to various electronic devices. As in Figure 1, generally, the battery cell assembly (40) is electrically connected by a method, such as resistance welding, using a resistance welding rod (20) between an electrode terminal (10) of each of multiple battery cells (30) mounted therein and a bus-bar (50) in the form of a metal plate.

In addition, as in Figure 2, the battery cells (30) of the conventional battery cell assembly have been sometimes fixed using an adhesive (60) (potting resin) or the like inside an exterior case (not shown) of the battery cell assembly (40) to prevent damage to the electrical connection by outer shocks.

However, in the battery cell assembly (40) of such a conventional art, when problems such as overdischarge, damage, or short circuit occurred in some battery cells (30) among multiple battery cells (30) during use, it was difficult to replace only some battery cells (30) in which the problems occurred individually. That is, multiple battery cells (30) were bonded to the bus-bar (50), and the like, whereby upon separating them from the bus-bar (50), the damage to the bus-bar (50) occurred, so that it was easy for the electrical connection of the normal battery cells (30) to be disconnected. Also, to separate the battery cell (30) fixed in the external case with the adhesive (60), the adhesive (60) must be removed, but an operation of removing the adhesive (60) was expensive and time-consuming, thereby making it inefficient.

Therefore, it was inevitable to replace the battery cell assembly (40) of the conventional art with a minimum unit such as a module assembly consisting of several battery cells (30) without fixing with any adhesive (60), or to replace it with a new battery cell assembly (40). In such a replacement method, normal battery cells must be discarded together with defective battery cells and it is difficult to recycle the discarded battery cells, so that there are problems of increasing maintenance costs of the battery cell assembly (40) and causing environmental pollution.

On the contrary, another problem occurred even when accommodating multiple battery cells in the housing without using the adhesive or wire bonding used in the conventional art. That is, due to the free space inside the housing, the battery cells caused frequent flow in the housing, thereby easily causing short circuits in the electrical connection portion or damage to the battery cells themselves, and the like.

Therefore, there is a need for development of a new type of battery assembly technology capable of stably fixing battery cells in a housing while facilitating replacement of individual battery cells.

### [Disclosure]

### [Technical Problem]

The present invention is intended to solve problems occurring in conventional battery assemblies.

Specifically, the battery cell assembly of the present invention is intended to provide a battery assembly, a battery pack, and a transportation device comprising the same, which can increase durability by preventing damage to electrical connection members (bus-bars, etc.) due to external impact while facilitating individual replacement.

### [Technical Solution]

In order to achieve the above-described objects, according to one example of the present invention, it provides a battery cell assembly comprising a plurality of battery cells, a housing including an accommodation portion in which the plurality of battery cells is accommodated, and at least one or more fixing members arranged to cover at least a partial region of an outer surface of each of the plurality of battery cells, for fixing the battery cells inside the accommodation portion.

In addition, a battery cell assembly related to one example of the present invention may comprise a plurality of battery cells, a housing including an accommodation portion in which the plurality of battery cells is accommodated, and at least one or more fixing members arranged to cover at least a partial region of an outer surface of each of the plurality of battery cells, for fixing the battery cells inside the accommodation portion, and having a battery cell exposure hole so that a portion of the battery cell is exposed to the outside.

The fixing member may comprise a side wall portion arranged to elastically support a portion of a side surface of the battery cell when the battery cell is disposed in the accommodation portion; and a damper portion arranged to elastically support at least a partial region of a lower surface of the battery cell when the battery cell is disposed in the accommodation portion. At this time, the side wall portion and the damper portion may be in a cap shape as formed integrally. In addition, the side wall portion and the damper portion may have a battery cell exposure hole formed so that a portion of the battery cell is exposed to the outside. The damper portion may have a predetermined thickness to buffer a load of the battery cell.

The fixing member may have a rib pressurizing portion protruding toward a lateral of the battery cell.

The fixing member may be provided by being coupled to the accommodation portion.

The fixing member may comprise an electrically insulating rubber material.

The accommodation portion may comprise a plurality of mounting grooves in which each of the plurality of battery cells is mounted, and a rib fixing portion protruding toward a lateral of the battery cell accommodated in the inner surface of the mounting groove may be provided.

The battery cell may comprise a positive terminal and a negative terminal.

The battery cell assembly may comprise a plurality of holder assemblies coupled to the housing and arranged to be detachable with each of the plurality of battery cells.

The holder assembly may comprise a positive bus-bar arranged to be electrically connected by directly contacting the positive terminal of the battery cell upon coupling with the battery cell; a positive mold having the positive bus-bar built in; and a negative bus-bar arranged to be connected to the negative terminal of the battery cell and coupled with the positive mold.

The positive mold may have electrical insulation, and may be coupled so that a portion of the positive bus-bar is exposed to the outside, and the negative bus-bar may be coupled with the positive mold, and may have a positive exposure hole formed so that an exposed portion of the positive bus-bar is exposed to the outside.

The positive bus-bar may comprise: a positive plate portion positioned at a lower portion of the positive mold; a positive connection unit having a shape protruding from the positive plate portion toward the positive terminal, and arranged to elastically pressurize the positive terminal; and a positive protrusion portion protruding and extending from the positive plate portion to be inserted into the positive exposure hole.

The positive mold may comprise: a mold plate portion arranged to cover an upper portion of the positive plate portion; and a mold protrusion portion protruding upward from the mold plate portion to cover a lateral of the positive protrusion portion and having an exposure hole formed so that an upper portion of the positive protrusion portion of the coupled positive bus-bar is exposed to the outside.

The negative bus-bar may comprise: a negative plate portion coupled with the housing; a negative convex portion convexly formed upward from the negative plate portion to form an accommodation space where the positive mold is accommodated; and a negative connection portion bent downward from the negative plate portion and extending from the negative plate portion to be in direct contact with the positive terminal.

Also, the housing may comprise an upper cover arranged to cover the upper portions of the plurality of battery cells; and a lower cover arranged to cover the lower portions of the plurality of battery cells. The upper cover may be formed with a positive opening opened so that the positive bus-bar is exposed to the outside, and a negative opening opened so that the negative bus-bar is exposed to the outside, and a plurality of connection members mounted on the upper portion of the upper cover, each of which is provided with at least one of a positive contact portion in contact with the positive bus-bar through the positive opening and a negative contact portion in contact with the negative bus-bar through the negative opening may be further included. In addition, a sealing member may be provided on a coupling surface of the upper cover and the lower cover.

To achieve the above-described objects, according to one example of the present invention, it provides a battery pack comprising at least one battery cell assembly and a battery management system (BMS).

To achieve the above-described objects, according to one example of the present invention, it provides a transportation device comprising the battery pack.

### [Effects of Invention]

As discussed above, the battery assembly, battery pack, and transportation device comprising the same, related to one example of the present invention have the following effects.

The battery cell is detachable from the holder assembly, and accordingly, individual replacement of the battery cells within the battery assembly is possible.

In addition, by comprising the fixing member in which the battery cells are fixed within the housing, it is possible to prevent damage to the electrical connection member (bus-bar, etc.) due to external impact while facilitating individual replacement of the battery cells, and it is possible to increase durability.

### [Brief Description of Drawings]

Figure 1 is a cross-sectional diagram schematically showing a welding process of a general battery cell and a bus-bar.
Figure 2 is a perspective diagram schematically showing a battery cell assembly including battery cells fixed using an adhesive of a conventional art.
Figure 3 is a perspective diagram schematically showing an appearance of a battery cell assembly according to one example of the present invention.
Figure 4 is an exploded perspective diagram schematically showing an appearance of a battery cell assembly according to one example of the present invention.
Figures 5 and 6 are a perspective diagram and a bottom perspective diagram schematically showing an appearance of a battery cell of a battery cell assembly according to one example of the present invention.
Figure 7 is a partial plan view schematically showing an appearance of a battery cell mounted on a lower cover of a battery cell assembly according to one example of the present invention.
Figure 8 is a partial perspective diagram schematically showing an appearance of a mounting cap coupled to a lower cover of a battery cell assembly according to one example of the present invention.
Figure 9 is a partial perspective diagram schematically showing an appearance of a mounting cap coupled to a lower cover of a battery cell assembly according to another example of the present invention.
Figure 10 is a partial plan view schematically showing an appearance of a battery cell inserted into a mounting groove of a lower cover of a battery cell assembly according to another example of the present invention.
Figure 11 is a partial perspective diagram schematically showing an appearance of the remaining components excluding a connection member, among components of a battery cell assembly according to one example of the present invention.
Figure 12 is an exploded perspective diagram schematically showing an appearance in which some components of a battery cell assembly according to one example of the present invention are exploded.
Figure 13 is a perspective diagram schematically showing an appearance in which a battery cell and a holder assembly of a battery cell assembly according to one example of the present invention are connected.
Figure 14 is an exploded perspective diagram schematically showing an exploded appearance of components of a holder assembly in a battery cell assembly according to one example of the present invention.
Figures 15 and 16 are diagrams schematically showing an appearance of some components of a holder assembly in a battery cell assembly according to one example of the present invention.
Figure 17 is a partial cross-sectional diagram schematically showing an internal appearance of a battery cell assembly according to one example of the present invention.
Figure 18 is a schematic diagram schematically showing an appearance of a battery pack according to one example of the present invention.
Figure 19 is a schematic diagram schematically showing an appearance of a transportation device according to one example of the present invention.

### [Mode for Invention]

Hereinafter, a battery assembly, a battery pack, and a transportation device comprising the same, according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

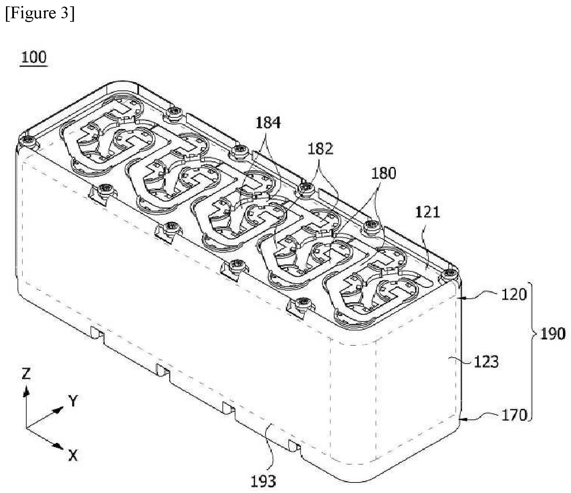

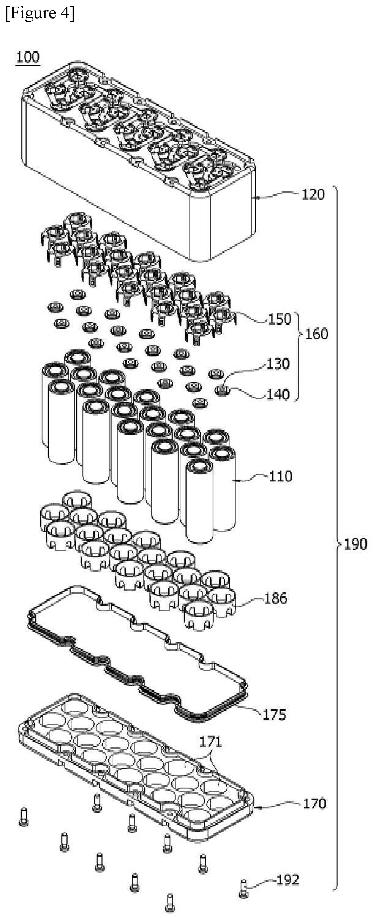

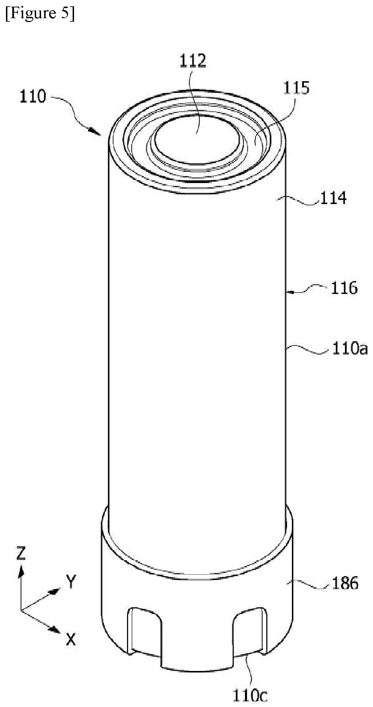

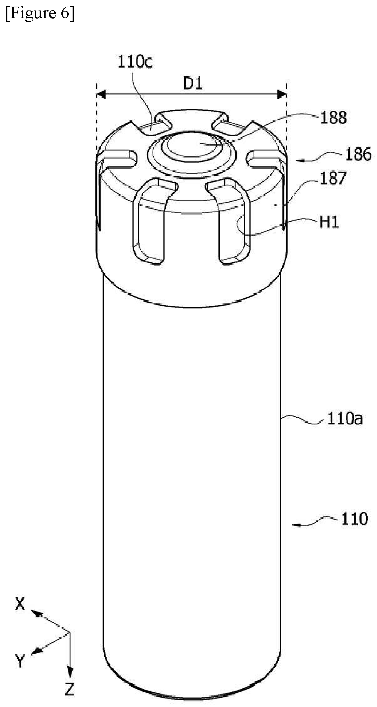

Figure 3 is a perspective diagram schematically showing an appearance of a battery cell assembly according to one example of the present invention. Figure 4 is an exploded perspective diagram schematically showing an appearance of a battery cell assembly according to one example of the present invention. Figures 5 and 6 are a perspective diagram and a bottom perspective diagram schematically showing an appearance of a battery cell of a battery cell assembly according to one example of the present invention.

Referring to Figures 3 to 6, the battery cell assembly (100) according to one example of the present invention comprises a plurality of battery cells (110). For example, the battery cell (110) may be a cylindrical battery cell. However, the outer shape of the battery cell is not necessarily limited to a cylindrical shape, which may be a rectangular battery cell with a cuboidal outer shape.

Also, each of the plurality of battery cells (110) may be equipped with a positive terminal (112) and a negative electrode terminal (114). For example, as in Figure 5, the battery cell (110) comprises an electrode assembly, a battery can (116) accommodating the electrode assembly (not shown) therein, and a cap assembly (115) coupled to the upper portion of the battery can (116). At this time, the positive terminal (112) may be located at the upper portion of the cap assembly (115). The negative electrode terminal (114) may be at least a part of the battery can (116). Then, the battery cell (110) may be filled therein with an electrolyte. In Figure 5, the shape of the battery can (116) is shown as a cylindrical shape, but the present invention is not necessarily limited to the cylindrical battery can (116), and a rectangular battery can may be applied.

Here, the electrode assembly comprises a positive electrode, a negative electrode, and a separator interposed between the positive electrode and the negative electrode. Then, the electrode assembly may have a shape wound in the form of a roll. The positive electrode may be made of metallic lithium or an active material containing a lithium alloy. The negative electrode may be made of carbon or an active material containing lithium such as metal oxide. The separator may be manufactured to include a non-conductive polymer such as polyolefin.

Here, the battery can (116) may be formed of an electrically conductive metal material. The outer wall of the battery can (116) may have mechanical rigidity to protect internal components such as the electrode assembly (not shown) and the electrolyte from the outside. The battery can (116) may be electrically connected to the negative electrode.

Here, the cap assembly (115) may be equipped with an insulating gasket (not shown), a venting device (not shown), a PTC element (not shown), and a terminal plate (not shown) connecting the positive terminal (112) and the positive electrode, and the like. However, the cap assembly is not necessarily limited to these components, and any general cap assembly equipped in the battery cell (110) is applicable.

Also, the battery cell assembly (100) according to one example of the present invention comprises a housing (190) arranged to accommodate a plurality of battery cells (110). For example, the housing (190) comprises an accommodation portion (193) in which an accommodation space corresponding to or larger than the size of the plurality of battery cells (110) is formed. The housing (190) may be provided with an electrically insulating material. For example, the housing (190) may be provided with a plastic material. In addition, the accommodation portion (193) of the housing (190) may be provided with a plurality of mounting grooves (171) in which each of the plurality of battery cells (110) is accommodated.

In addition, the battery cell assembly (100) of the present invention comprises at least one or more fixing members (186), to fix the battery cells (110) to the inside without flowing in the accommodation portion (193). The fixing member (186) is arranged to cover at least a partial region of the outer surface of each of the plurality of battery cells (110). For example, the fixing member (186) may be arranged to cover at least a partial region of the side surface and the bottom surface of each of the plurality of battery cells (110).

Therefore, the battery cell assembly (100) of the present invention can stably fix the battery cells (110) within the accommodation portion (193) by comprising such a fixing member (186). Through this, the present invention can prevent the plurality of battery cells (110) from being misaligned or damaged by impact within the housing (190). Ultimately, the battery assembly (100) of the present invention has an advantage that by detaching the fixing member (186) from a defective battery cell (110) and applying a new battery cell (110), as needed, the defective battery cell (110) can be easily replaced, while stably accommodating the plurality of battery cells (110) within the housing (190).

Also, as in Figure 6, the fixing member (186) may be arranged to elastically support at least a portion of the outer surface of the battery cell (110) when the battery cell (110) is disposed in the accommodation portion (193). Specifically, the fixing member (186) may comprise a side wall portion (187) arranged to elastically support a portion of the side surface of the battery cell (110) when the battery cell (110) is disposed in the accommodation portion (193). In addition, the fixing member (186) may comprise a damper portion (188) arranged to elastically support at least a portion of the lower surface of the battery cell (110) when the battery cell (110) is disposed in the accommodation portion (193). The side wall portion (187) and the damper portion (188) may also be formed integrally. The side wall portion (187) is formed to have a predetermined thickness while surrounding the side surface of the battery cell (110). At this time, the inner diameter of the side wall portion (187) is set to be slightly smaller than the outer diameter of the battery cell (110), so that it can elastically press the side surface of the battery cell (110). With such a constitution, it can be stably fixed to the surface of the battery cell (110).

In addition, the fixing member (186) may have a cap shape in which the side wall portion (187) and the damper portion (188) are integrally formed. The fixing member (186) may be integrally formed to surround at least partial regions of the side surface (110a) and the lower surface (110c) of the battery cell (110) together.

Furthermore, the side wall portion (187) and the damper portion (188) may be formed with a battery cell exposure hole (H1) so that a portion of the battery cell (110) is exposed to the outside. For example, as in Figure 6, a plurality of battery cell exposure holes (H1) for heat dissipation may be formed to be spaced apart at a predetermined interval in the side wall portion (187) and the damper portion (188).

In addition, the battery cell exposure holes (H1) may be arranged so that when the fixing member (186) is inserted into the mounting groove (171), a portion of the fixing member (186) that is compressed and pushed out is gathered into the battery cell exposure holes (H1). In other words, the battery cell exposure holes (H1) may serve as a kind of buffer space accommodating the deformed portion of the fixing member (186). Therefore, the present invention has an advantage that the insertion process of inserting the fixing member (186) into the mounting groove (171) can proceed smoothly.

However, the position where the fixing member (186) elastically supports the outer surface of the battery cell (110) and the elastically supporting form of the fixing member (186) are not limited to a specific form. For example, the fixing member (186) may be arranged to elastically support at least a portion of the outer surface of the battery cell (110) in the form of a point or a line.

Also, the damper portion (188) may be formed to surround the bottom surface, i.e., the lower surface, of the battery cell (110). The damper portion (188) is in close contact with the lower surface of the battery cell (110), thereby suppressing the battery cell (110) from vertically vacillating within the mounting groove (171) of the housing (190). Furthermore, the damper portion (188) may support the weight of the battery cell (110) and simultaneously perform the function of absorbing vibration.

In addition, the damper portion (188) of the fixing member (186) may have a predetermined thickness to be capable of buffering the load of the battery cell (110). The damper portion (188) is a portion where it is located at the center of the lower surface of the battery cell (110) to directly support the weight of the battery cell (110). In this instance, if the damper portion (188) is too thin, it does not withstand the weight of the battery cell (110), whereby there is a risk that the lower portion of the battery cell (110) is deformed or damaged. On the other hand, if the damper portion (188) is too thick, the overall height of the battery cell assembly (100) increases unnecessarily, whereby the internal space utilization of the housing (190) is reduced.

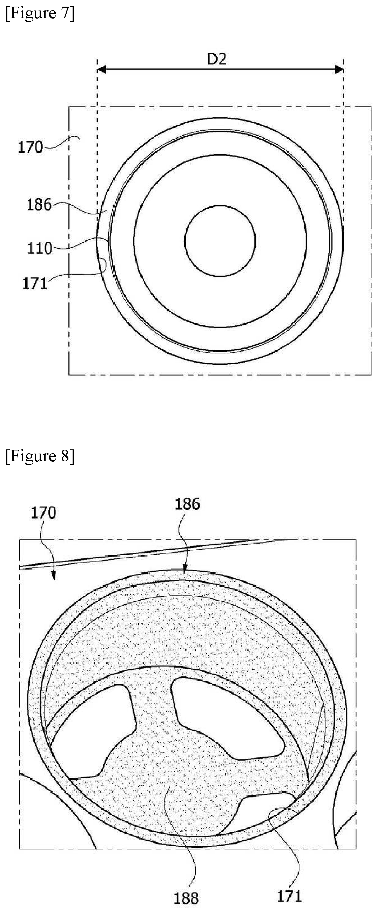

Figure 7 is a partial plan view schematically showing an appearance of a battery cell (110) mounted on a lower cover (170) of a battery cell assembly (100). Then, Figure 8 is a partial perspective diagram schematically showing an appearance of a fixing member (186) coupled to a lower cover (170) of a battery cell assembly (100).

Referring to Figures 3 to 8, the fixing member (186) may be coupled to the accommodation portion (193). For example, the fixing member (186) may be provided by being coupled to the mounting groove (171) of the housing (190). Through such a constitution, the fixing member (186) may simultaneously perform a role of fixing the battery cell (110) to the housing (190) together with a function of protecting the battery cell (110) by surrounding the battery cell (110).

Also, the battery cell assembly (100) may apply a double injection molding technique, to couple the fixing member (186) and the mounting groove (171). This is a method in which the fixing member (186) is simultaneously injection-molded during the process of forming the housing (190), instead of a method in which the housing (190) and the fixing member (186) are manufactured separately, and then coupled. Through such a double injection process, it is possible to obtain a structure in which the fixing member (186) is firmly coupled to the inner surface of the mounting groove (171) of the housing (190). Particularly, during the injection process, a fixing member (186) material adheres closely to a concavo-convex portion or a void interior of the mounting groove (171), so that mechanical bonding force can be greatly improved. In addition, the method of coupling the fixing member (186) to the mounting groove (171) through double injection has the advantage of improving the fixing performance of the battery cell (110) as well as increasing productivity.

In addition, the coupling between the mounting groove (171) and the fixing member (186) may be implemented in various ways. For example, it may be a mechanical coupling method in which a fixing member (186) surrounding a lower portion of a battery cell (110) is pressed into an inner circumference surface of a mounting groove (171) formed in an accommodation portion (193). For example, the width (D1) of the battery cell (110) surrounded by the fixing member (186) may be formed to be slightly larger than the width (D2) of the inner space of the mounting groove (171) of the housing (190). When the battery cell (110) is inserted into the mounting groove (171), a portion of the fixing member (186) is compressed, and the battery cell (110) is strongly fixed by this compressive force, whereby it can be forcibly fitted.

Furthermore, the fixing member (186) may comprise an electrically insulating rubber material. As at least a portion of the fixing member (186) is made of an electrically insulating material, there is an effect of preventing leakage current and short circuits by improving electrical insulation between the plurality of battery cells (110). Particularly, the present invention can increase adhesiveness and elasticity of the portion surrounding the battery cell (110) by using a rubber material, which is an elastic material. It is also helpful in protecting the battery cell (110) from external vibration or impact as well as stably fixing the battery cell (110) into the mounting groove (171) without flow.

For example, the rubber material may include synthetic rubber such as silicone rubber, ethylene propylene rubber (EPDM), or polyurethane, or natural rubber, and the like. Therefore, the battery cell assembly (100) of the present invention can simultaneously secure the fixing stability and electrical insulation of the battery cell (110) by comprising electrically insulating rubber as the material of the fixing member (186).

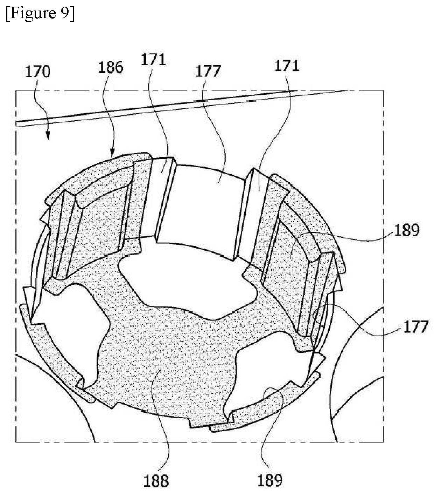

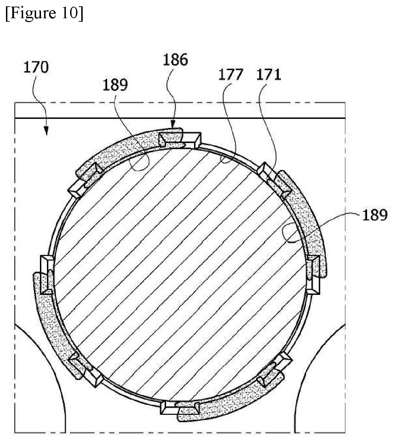

Figure 9 is a partial perspective diagram schematically showing an appearance of a fixing member (186) coupled to a lower cover (170) of a battery cell assembly (100) according to another example of the present invention. Then, Figure 10 is a partial plan view schematically showing an appearance of a battery cell (110) inserted into a mounting groove (171) of a lower cover (170) of a battery cell assembly (100) according to another example of the present invention.

Referring to Figures 3 to 6, 9, and 10, the fixing member (186) may comprise a rib pressurizing portion (189) protruding toward a lateral of the battery cell (110) accommodated in the inner surface of the mounting groove (171). The rib pressurizing portion (189) may be formed on the inner surface of the side wall portion (187) of the fixing member (186). The rib pressurizing portion (189) may locally pressurize the side surface of the battery cell (110) to increase the fixing force between the battery cell (110) and the fixing member (186).

In addition, the rib pressurizing portions (189) may be dispersedly disposed over a plurality of points along the inner surface of the side wall portion (187) of the fixing member (186). Through this, by securing even adhesiveness over the entire surface of the battery cell (110), it is possible to maximize position maintenance stability of the battery cell (110).

Therefore, the present invention can increase a bonding strength with the battery cell (110) and significantly improve position fixing ability within the housing (190) by providing the fixing member (186) with the rib pressurizing portion (189). This is effective in maintaining structural stability of the battery cell assembly (100) even under vibration or impact load.

In addition, the housing (190) may comprise a rib fixing portion (177) on the inner surface of the accommodation portion (193). For example, the rib fixing member (177) may have a shape protruding from the inner surface of the mounting groove (171) of the accommodation portion (193) of the housing (190) toward the battery cell (110). This performs a role which fixes and supports the position of the battery cell (110) inserted into the mounting groove (171). Particularly, the rib fixing member (177) may locally press a portion of the side surface of the battery cell (110) to prevent the battery cell (110) from flowing within the mounting groove (171). The rib fixing members (177) may be dispersedly disposed over a plurality of points along the inner surface of the side wall portion (187) of the fixing member (186). The rib fixing member (177) may comprise a plastic material having excellent electrical insulation.

Therefore, the battery cell assembly (100) can significantly improve the fixing stability of the battery cell (110) by providing the mounting groove (171) of the housing (190) with the rib fixing portion (177).

Referring to Figures 3 and 4, the housing (190) may comprise an upper cover (120). Here, the upper cover (120) may be provided to cover the upper and middle portions of the plurality of battery cells (110). For example, as in Figures 3 and 4, the upper cover (120) may be arranged with an upper wall (121), and sidewalls (123) extending downward from the outer periphery of the upper wall (121). The lower cover (170) may be provided to cover the lower portion of the plurality of battery cells (110).

Also, the housing (190) may comprise a lower cover (170). The lower cover (170) of the battery cell assembly (100) may be a lower cover (170) arranged to be coupled with the lower portion of the upper cover (120). For example, the upper cover (120) and the lower cover (170) may be screw-coupled using a fastening bolt (192). In addition, the lower cover (170) may be arranged to cover the lower portion of each of the plurality of battery cells (110). To this end, the lower cover (170) may be formed with a plurality of mounting grooves (171) accommodating the lower portions of the plurality of battery cells (110), respectively.

In addition, the battery cell assembly (100) may be easily assembled by a method of seating the plurality of battery cells (110) on the lower cover (170), and then covering it with the upper cover (120).

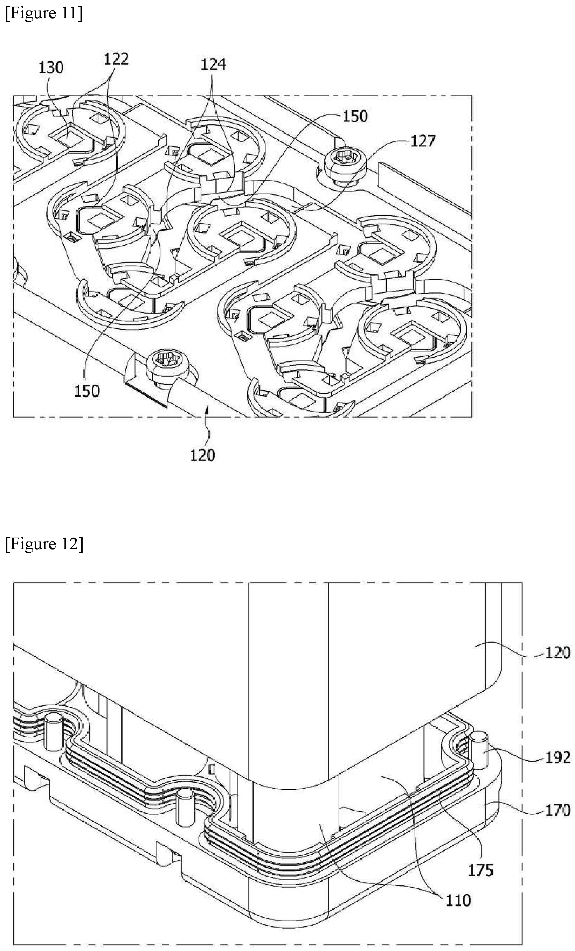

Figure 11 is a partial perspective diagram schematically showing an appearance of the remaining components excluding a connection member (180), among components of a battery cell assembly (100) according to one example of the present invention.

Referring to Figures 3, 4, and 11, the upper cover (120) may be formed with a positive opening (122) for contact between the positive bus-bar (130) and the connection member (180) to be described below. Specifically, the positive opening (122) may have a shape opened so that the positive bus-bar (130) is exposed to the outside.

Also, the upper cover (120) may be formed with a negative opening (124) for contact between the negative bus-bar (150) and the connection member (180) to be described below. Specifically, the negative opening (124) may have a shape opened so that the negative bus-bar (150) is exposed to the outside.

In addition, the upper cover (120) may be formed with a connection groove (127) arranged to insert the connection member (180) to be described below. For example, the connection groove (127) may have a size corresponding to that of the connection member (180).

Furthermore, the battery cell assembly (100) may further comprise a plurality of connection members (180). The connection member (180) may be mounted on the upper portion of the upper cover (120). Each of the plurality of connection members (180) may comprise at least one of a positive contact portion (182) and a negative contact portion (184). The positive contact portion (182) may be arranged to contact the positive plate portion (132) of the positive bus-bar (130) through the positive opening (122).

As one example, the negative contact portion (184) may be arranged to contact the negative plate portion (152) of the negative bus-bar (150) through the negative opening (124). The connection member (180) may have a shape extending along the connection groove (127) formed on the upper surface of the upper cover (120). That is, the connection member (180) may have a shape bent according to the upper surface structure of the upper cover (120). For example, as in Figure 3, the battery cell assembly (100) may comprise a connection member (180) electrically connected to a plurality of positive bus-bars (130) and a connection member (180) connected to the positive bus-bar (130) and the negative bus-bar (150).

Figure 12 is an exploded perspective diagram schematically showing an appearance in which some components of a battery cell assembly (100) according to one example of the present invention are exploded.

Referring to Figures 3, 4, and 12, the battery cell assembly (100) may further comprise a sealing member (175) for waterproofing the battery cell assembly (100). The sealing member (175) may be provided on the coupling surface of the upper cover (120) and the lower cover (170). For example, the sealing member (175) may have a linear shape extending long in one direction. The sealing member (175) may have a loop shape in which both linear shaped ends thereof are connected. The sealing member (175) is continuously formed with constant width and thickness along the entire coupling surface of the upper cover (120) and the lower cover (170). Accordingly, it is possible to prevent a gap from occurring between the upper cover (120) and the lower cover (170).

In addition, the sealing member (175) may comprise a polymer material or a rubber material. For example, the rubber material may include synthetic rubber such as silicone rubber, EPDM (Ethylene Propylene Diene Monomer) rubber, or polyurethane, or natural rubber, and the like. For example, the sealing member (175) may comprise a silicone material such as silicone rubber. Since the silicone material has excellent heat resistance, cold resistance, ozone resistance, chemical resistance, and the like, it can maintain airtightness even in harsh usage environments of the battery pack (200). However, the sealing member (175) is not necessarily limited to only these materials, and any elastic material capable of increasing sealing properties of the housing, and having electrical insulation may be applied.

For example, in the process of manufacturing the lower cover (170), the sealing member (175) may be formed to be inserted into the lower cover (170) together with the fixing member (186) using a double injection method.

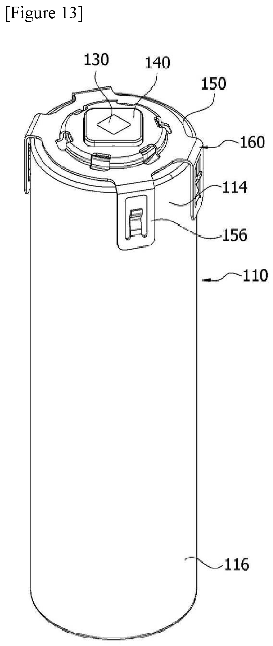

Figure 13 is a perspective diagram schematically showing an appearance in which a battery cell (110) and a holder assembly (160) of a battery cell assembly (100) according to one example of the present invention are coupled.

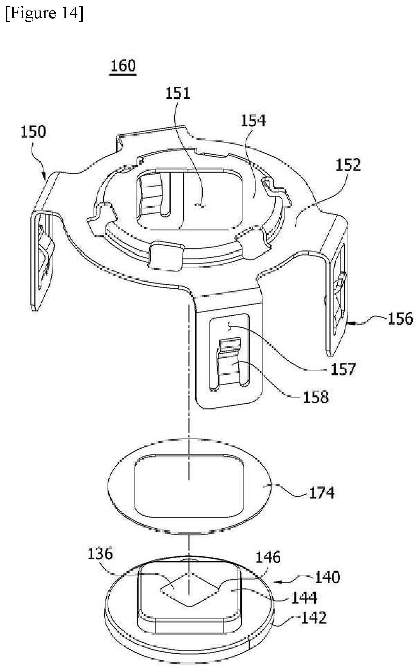

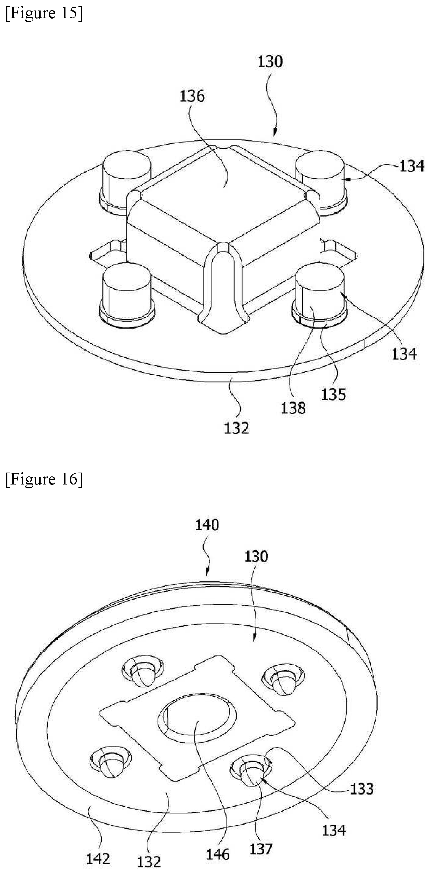

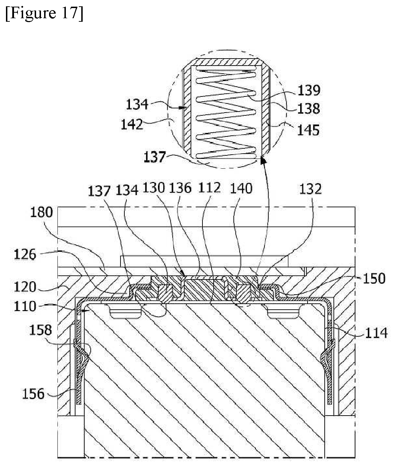

Also, Figure 14 is an exploded perspective diagram schematically showing an exploded appearance of components of a holder assembly (160) in a battery cell assembly (100) according to one example of the present invention. Then, Figures 15 and 16 are diagrams schematically showing an appearance of some components of a holder assembly in a battery cell assembly according to one example of the present invention. Figure 17 is a partial cross-sectional diagram schematically showing an internal appearance of a battery cell assembly (100) according to one example of the present invention.

Referring to Figures 3, 4, and 13 to 17, the battery cell assembly (100) comprises a plurality of holder assemblies (160). The plurality of holder assemblies (160) is each arranged to be combinable to the inside of the upper cover (120). The plurality of holder assemblies (160) is arranged for each of the plurality of battery cells (110) to be detachable. As in Figure 13, the holder assembly (160) may be arranged to be connectable to the upper portion of the battery cell (110). In addition, the holder assembly (160) may be arranged so that when the positive terminal (112) of the battery cell (110) and the positive bus-bar (130) contact, the negative bus-bar (150) and the negative terminal (114) of the battery cell (110) contact.

On the contrary, the holder assembly (160) may be arranged to be detachable from the upper portion of the battery cell (110). In addition, the holder assembly (160) may be arranged so that when the battery cell (110) is separated from the holder assembly (160), the positive terminal (112) and the negative terminal (114) are sequentially separated from the positive bus-bar (130) and the negative bus-bar (150).

Therefore, in the battery cell assembly (100), the battery cell (110) is arranged to be detachable from the holder assembly (160), whereby a plurality of battery cells (110) mounted without damage to a fixing member in which the battery cells (110) are fixed within an external case, or an electrical connection member (bus-bar, etc.) is arranged to be individually replaceable, so that it is possible to prevent a problem in which electrical connection of normal battery cells (110) is disconnected in a process of replacing defective battery cells (110); because there is no need to remove the adhesive when the battery cells (110) are replaced, the replacement costs and time can be effectively reduced; and because a problem in which the normal battery cells (110) are discarded together with the defective battery cells (110) can be prevented, the maintenance costs of the battery cell assembly (100) can be lowered and environmental pollution can be prevented.

Referring to Figures 13 to 17, each of the plurality of holder assemblies (160) comprise a positive bus-bar (130). The positive bus-bar (130) is arranged to be electrically connected by contacting the positive terminal (112). The positive bus-bar (130) may be equipped with a metal plate having a structure in which a positive protrusion portion (136) is bent at least once or more toward a mold protrusion portion (144).

Also, each of the plurality of holder assemblies (160) comprises a positive mold (140). The positive mold (140) is equipped with an electrical insulation material. The electrical insulation material may be, for example, a plastic material. The positive mold (140) is provided to be coupled to the positive bus-bar (130). At this time, the positive mold (140) may be combined so that a part of the positive bus-bar (130) is exposed. The method of combining the positive mold (140) and the positive bus-bar (130) may use an insert injection method. For example, through a process of inserting the positive bus-bar (130) into a mold in advance, injecting a molten plastic material with electrical insulation into each cavity of the mold, and then curing it, the positive bus-bar (130) and the positive mold (140) may be combined.

In addition, each of the plurality of holder assemblies (160) comprises a negative bus-bar (150) arranged to be connected to the negative terminal (114). The negative bus-bar (150) may be combined with the positive mold (140). The negative bus-bar (150) may be combined with the positive mold (140) using, for example, an adhesive or an adhesive tape (174), and the like. A positive exposure hole (151) may be formed in the negative bus-bar (150) so that the exposed portion of the positive bus-bar (130) is exposed to the outside. For example, the positive exposure hole (151) may be formed so that the upper portion of the positive bus-bar (130) may be exposed to the outside.

Therefore, the battery cell assembly (100) related to one example of the present invention comprises a plurality of holder assemblies (160), whereby a plurality of battery cells (110) mounted without damage to a fixing member in which the battery cells (110) are fixed within an external case, or an electrical connection member (bus-bar, etc.) is arranged to be individually replaceable. Also, the present invention can prevent a problem in which electrical connection of normal battery cells (110) is disconnected in a process of replacing defective battery cells (110). In addition, because there is no need to remove the adhesive when the battery cells (110) are replaced, the present invention can effectively reduce the replacement costs and time can be effectively reduced. Furthermore, the present inventio can prevent a problem of the conventional art in which the normal battery cells (110) are discarded together with the defective battery cells (110). In addition, the maintenance costs of the battery cell assembly (100) can be lowered and environmental pollution can be prevented.

Also, the positive bus-bar (130) may comprise a positive plate portion (132). The positive plate portion (132) may be located at the lower portion of the positive mold (140). The positive plate portion (132) may have a circular outer periphery portion and a flat plate shape.

In addition, the positive bus-bar (130) may comprise a positive connection unit (134). The positive connection unit (134) may have a shape protruding from the positive plate portion (132) toward the positive terminal (112). The positive connection unit (134) may be provided to elastically pressurize the positive terminal (112). That is, the positive connection unit (134) may be provided so that its protruding length is variable depending on the distance between the positive bus-bar (130) and the positive terminal (112).

Furthermore, the positive bus-bar (130) may comprise a positive protrusion portion (136). The positive protrusion portion (136) may be provided to be inserted into the positive exposure hole (151). The positive protrusion portion (136) may have a shape that protrudes and extends from the positive plate portion (132). The positive protrusion portion (136) is bonded to a connection member (180) (outer bus-bar) to be described below, which may be electrically connected.

Referring to Figures 13 to 17, the positive connection unit (134) may include a body portion (138). The body portion (138) may have electrical conductivity. That is, the body portion (138) may comprise a material such as an electrically conductive metal. The body portion (138) may be provided to be embedded in the positive mold (140). That is, the body portion (138) of the positive connection unit (134) may be combined to the inside of the positive mold (140) using the insert injection method.

Also, the positive connection unit (134) may comprise a pressurization moving part (137). The pressurization moving part (137) may have electrical conductivity. That is, the pressurization moving part (137) may comprise an electrically conductive metal material. The pressurization moving part (137) may be equipped at the lower portion of the body portion (138). That is, the pressurization moving part (137) may be arranged to directly contact the positive terminal (112). To this end, the pressurization moving part (137) may be arranged to be movable in a direction of pressurizing the positive terminal (112). At this time, the pressurization moving part (137) is designed to be movable within a certain range toward the positive terminal (112), so that the contact pressure with the positive terminal (112) can be appropriately adjusted.

In addition, the positive connection unit (134) may comprise an elastic member (139). The elastic member (139) may be embedded into the body portion (138). The elastic member (139) may be arranged to elastically pressurize the pressurization moving part (137) toward the positive terminal (112). The elastic member (139) is installed inside the body portion (138) to elastically support the pressurization moving part (137), thereby stably maintaining the pressurizing force against the positive terminal (112). Through such a positive connection unit (134), the electrical connection between the positive terminal (112) and the positive bus-bar (130) can be more reliably achieved.

Therefore, the battery cell assembly (100) can electrically connect the positive terminal (112) and the positive bus-bar (130) with high reliability by comprising such a positive connection unit (134). In addition, the positive connection unit (134) elastically pressurizes the positive terminal (112), whereby it is possible to prevent deformation or damage to the positive connection unit (134) or the positive terminal (112), and thus it is possible to effectively prevent defective connections due to deformation or damage to the positive connection unit (134) or the positive terminal (112) occurring in the connecting process of the conventional art.

The positive connection unit (134) may be arranged to penetrate the positive disk portion (132). That is, at least one through-hole (133) may be formed in the positive disk portion (132) so that the positive connection unit (134) may penetrate. The positive connection unit (134) may be equipped with a stopper (135) on the body portion (138). The stopper (135) may be arranged to prevent the pressurization moving part (137) from moving in the insertion direction in a state where it is inserted into the through-hole (133).

Also, the positive mold (140) may comprise a mold plate portion (142). The mold plate portion (142) may be arranged to cover the upper portion of the positive plate portion (132). That is, the mold plate portion (142) may be coupled to the upper portion of the positive plate portion (132). The mold plate portion (142) may have electrical insulation. The mold plate portion (142) may have a disk shape.

In addition, the positive mold (140) may comprise a mold protrusion portion (144). The mold protrusion portion (144) may be provided to cover a part of the side and upper surfaces of the positive protrusion portion (136). To this end, the mold protrusion portion (144) may have a shape protruding in an upward direction from the mold plate portion (142). An exposure hole (146) may be formed in the mold protrusion portion (144). The exposure hole (146) may be arranged inside the mold protrusion portion (144) so that the upper portion of the positive protrusion portion (136) of the coupled positive bus-bar (130) is exposed to the outside. Since the upper surface of the positive protrusion portion (136) is opened through such an exposure hole (146), the positive protrusion portion (136) facilitates electrical connection with the connection member (180). Therefore, through the structure of the positive mold (140), it can smoothly make electrical connection with other components while promoting effective insulation and fixing of the positive bus-bar (130).

Furthermore, the positive protrusion portion (136) of the positive bus-bar (130) may be built into the mold protrusion portion (144). In addition, as in Figure 17, the mold plate portion (142) may be provided with an insertion groove (145). The insertion groove (145) may be arranged to accommodate an end of the body portion (138) of the positive connection unit (134).

Specifically, the negative bus-bar (150) may comprise a negative plate portion (152). The negative plate portion (152) may be arranged to be coupled with the upper cover (120). The negative plate portion (152) may have a circular shape.

For example, as a double-sided adhesive tape (not shown) or an adhesive is added between the upper surface of the negative plate portion (152) and the inner surface of the upper cover (120), the negative plate portion (152) may be bonded to the upper cover (120). However, it is not necessarily limited to such a bonding method, and the negative plate portion (152) may be coupled to the inner surface structure of the upper cover (120) through mechanical coupling. For example, the negative plate portion (152) may be coupled to the upper cover (120) using an interference fit method or an insert injection method.

Also, the negative bus-bar (150) may comprise a negative convex portion (154). The negative convex portion (154) may be convexly formed in an upward direction from the negative plate portion (152) to form an accommodation space (126) in which the positive mold (140) is accommodated. The negative electrode convex portion (154) may be formed through a casting or rolling process. Such a negative convex portion (154) protrudes from the negative plate portion (152) to provide a space where the positive mold (140) is to be seated, thereby enabling compact assembly of the positive bus-bar (130) and the negative bus-bar (150).

In addition, the negative bus-bar (150) may comprise a negative connection portion (156). The negative connection portion (156) may have a shape bent in a downward direction from the negative plate portion (152). The negative connection portion (156) may have a shape extending from the negative plate portion (152) to directly contact the negative terminal (111). For example, as in Figure 13, the negative bus-bar (150) may be equipped with four negative connection portions (156). The four negative electrode connecting portions (156) may have a shape bent in a downward direction from the negative plate portion (152) to connect to the negative terminal (114) of the battery can (116) located at the lower portion. Then, the negative connection portion (156) is formed to extend downward from the opposite side of the negative plate portion (152), thereby directly contacting the negative terminal (114) of the battery cell (110). In this instance, it is preferable that the negative connection portion (156) exerts elastic force to be capable of stably contacting the negative terminal (114).

Furthermore, the negative bus-bar (150) has a structure in which the negative plate portion (152) directly coupled with the housing (190) is used as a basic body, and the negative convex portion (154) and the negative connection portion (156) are formed integrally.

Therefore, as the negative bus-bar (150) in the battery cell assembly (100) of the present invention comprises such negative convex portion (154) and negative connection portion (156), the positive bus-bar (130) can be stably accommodated and coupled, whereby it is possible to induce stable contact between the positive bus-bar (130) and the positive terminal (112), and moreover, it is possible to directly connect to the negative terminal (114) of the battery cell (110) coupled to the lower portion of the holder assembly (160). Ultimately, such a negative bus-bar (150) can implement the compact holder assembly (160), thereby effectively increasing the energy density of the battery cell assembly (100).

Also, as in Figures 14 to 17, a connection opening (157), in which a portion is perforated and formed, may be formed in the negative connection portion (156). Then, the negative connection portion (156) may be equipped with a connection protrusion (158) protruding and extending from the inner periphery of the connection opening (157). Such a connection opening (157) may be formed larger than the connection protrusion (158). Accordingly, when the connection protrusion (158) contacts the negative terminal (114), it does not contact the inner periphery of the connection opening (157) even if the connection protrusion (158) is deformed, whereby it is possible to prevent damage due to collision of the connection protrusion (158).

In addition, the connection protrusion (158) may be provided to enable elastic pressurization. The connection protrusion (158) may have a shape in which a part of the negative connection portion (156) protrudes toward the negative terminal (114). The connection protrusion (158) may have a shape extending long in one direction. The connection protrusion (158) may have a structure bent in a V-shape toward the battery can (116). Such a connection protrusion (158) in a V-shape has an advantage to be capable of elastically pressurizing the negative terminal (114).

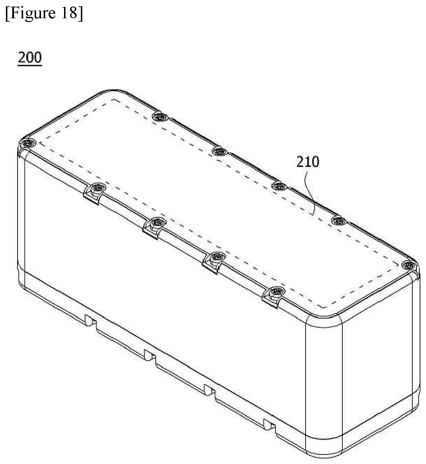

Figure 18 is a schematic diagram schematically showing an appearance of a battery pack (200) according to one example of the present invention.

Referring to Figure 18, the present invention provides a battery pack (200) according to one example of the present invention. The battery pack (200) comprises at least one battery cell assembly (100), and a battery management system (BMS) (210). Specifically, the battery management system (210) may perform battery cell (110) overcharge/overdischarge prevention and temperature management, and the like. The battery management system (210) may be embedded into the inside of the battery pack (200).

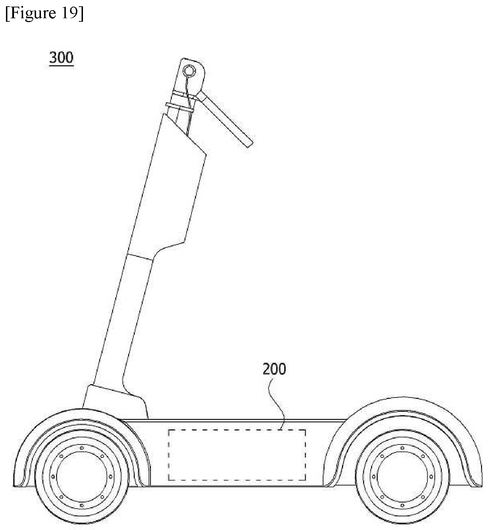

Figure 19 is a schematic diagram schematically showing an appearance of a transportation device (300) according to one example of the present invention.

Referring to Figure 19, the present invention provides a transportation device (300) according to one example of the present invention. Such a transportation device (300) comprises the battery pack (200) of the present invention. That is, the transportation device (300) may have the battery pack (200) embedded therein. The transportation device (300) may use the battery pack (200) as a moving power source. For example, the transportation device (300) may be an electric vehicle, an electric bicycle, an electric scooter, an electric wheelchair, an unmanned robot, an unmanned aircraft, and the like.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

## Claims

1. A battery cell assembly, **characterized by** comprising:
a plurality of battery cells;
a housing including an accommodation portion in which the plurality of battery cells is accommodated; and
at least one or more fixing members arranged to cover at least a partial region of an outer surface of each of the plurality of battery cells, for fixing the battery cells inside the accommodation portion, and having a battery cell exposure hole so that a portion of the battery cell is exposed to the outside.

2. The battery cell assembly according to claim 1, **characterized in that**
the fixing member comprises:
a side wall portion arranged to elastically support a portion of a side surface of the battery cell when the battery cell is disposed in the accommodation portion; and
a damper portion arranged to elastically support at least a partial region of a lower surface of the battery cell when the battery cell is disposed in the accommodation portion.

3. The battery cell assembly according to claim 2, **characterized in that**
the side wall portion and the damper portion are in a cap shape as formed integrally.

4. The battery cell assembly according to claim 2, **characterized in that**
the side wall portion and the damper portion have a battery cell exposure hole formed so that a portion of the battery cell is exposed to the outside.

5. The battery cell assembly according to claim 2, **characterized in that**
the damper portion has
a predetermined thickness to buffer a load of the battery cell.

6. The battery cell assembly according to claim 1, **characterized in that**
the fixing member has
a rib pressurizing portion protruding toward a lateral of the battery cell.

7. The battery cell assembly according to claim 1, **characterized in that**
the fixing member is
provided by being coupled to the accommodation portion.

8. The battery cell assembly according to claim 1, **characterized in that**
the fixing member comprises
an electrically insulating rubber material.

9. The battery cell assembly according to claim 1, **characterized in that**
the accommodation portion comprises a plurality of mounting grooves in which each of the plurality of battery cells is mounted, and
a rib fixing portion protruding toward a lateral of the battery cell accommodated in the inner surface of the mounting groove is provided.

10. The battery cell assembly according to claim 1, **characterized in that**
the battery cell comprises a positive terminal and a negative terminal, and
a plurality of holder assemblies coupled with the housing and arranged to be detachable with each of the plurality of battery cells is further included, wherein
the holder assembly comprises:
a positive bus-bar arranged to be electrically connected by directly contacting the positive terminal of the battery cell upon coupling with the battery cell;
a positive mold having the positive bus-bar built in; and
a negative bus-bar arranged to be connected to the negative terminal of the battery cell and coupled with the positive mold.

11. The battery cell assembly according to claim 10, **characterized in that**
the positive mold has
electrical insulation, and is coupled so that a portion of the positive bus-bar is exposed to the outside.

12. The battery cell assembly according to claim 10, **characterized in that**
the negative bus-bar is
coupled with the positive mold, and has a positive exposure hole formed so that an exposed portion of the positive bus-bar is exposed to the outside.

13. The battery cell assembly according to claim 12, **characterized in that**
the positive bus-bar comprises:
a positive plate portion positioned at a lower portion of the positive mold;
a positive connection unit having a shape protruding from the positive plate portion toward the positive terminal, and arranged to elastically pressurize the positive terminal; and
a positive protrusion portion protruding and extending from the positive plate portion to be inserted into the positive exposure hole.

14. The battery cell assembly according to claim 13, **characterized in that**
the positive mold comprises:
a mold plate portion arranged to cover an upper portion of the positive plate portion; and
a mold protrusion portion protruding upward from the mold plate portion to cover a lateral of the positive protrusion portion and having an exposure hole formed so that an upper portion of the positive protrusion portion of the coupled positive bus-bar is exposed to the outside.

15. The battery cell assembly according to claim 10, **characterized in that**
the negative bus-bar comprises:
a negative plate portion coupled with the housing;
a negative convex portion convexly formed upward from the negative plate portion to form an accommodation space where the positive mold is accommodated; and
a negative connection portion bent downward from the negative plate portion and extending from the negative plate portion to be in direct contact with the positive terminal.

16. The battery cell assembly according to claim 10, **characterized in that**
the housing comprises:
an upper cover arranged to cover the upper portions of the plurality of battery cells; and
a lower cover arranged to cover the lower portions of the plurality of battery cells.

17. The battery cell assembly according to claim 16, **characterized in that**
the upper cover is
formed with a positive opening opened so that the positive bus-bar is exposed to the outside, and a negative opening opened so that the negative bus-bar is exposed to the outside

18. The battery cell assembly according to claim 17, **characterized in that**
a plurality of connection members mounted on the upper portion of the upper cover, each of which is provided with at least one of a positive contact portion in contact with the positive bus-bar through the positive opening, and a negative contact portion in contact with the negative bus-bar through the negative opening is further included.

19. A battery pack, **characterized by** comprising:
at least one battery cell assembly according to any one of claims 1 to 18; and
a battery management system (BMS).

20. A transportation device, **characterized by** comprising the battery pack according to cl aim 19.
